Europäisches Patentamt

European Patent Office

Office européen des brevets

(19)

(11) Numéro de publication : **0 475 850 A1**

(12) ## DEMANDE DE BREVET EUROPEEN

(21) Numéro de dépôt : **91402439.3**

(51) Int. Cl.⁵ : **F24H 1/10**

(22) Date de dépôt : **13.09.91**

(30) Priorité : **14.09.90 FR 9011390**

(43) Date de publication de la demande :
**18.03.92 Bulletin 92/12**

(84) Etats contractants désignés :
**DE GB IT**

(71) Demandeur : **ELECTRICITE DE FRANCE
Service National
2, rue Louis Murat
F-75008 Paris (FR)**

(72) Inventeur : **Chrétien, Patrice
22 Cité Moulin des Serpes
F-77670 Vernou la Celle (FR)**
Inventeur : **Deschamps, Guy
15 rue Jean Mermoz
F-77210 Avon (FR)**

(74) Mandataire : **Ilgart, Jean-Christophe et al
c/o Société de Protection des Inventions, 25,
rue de Ponthieu
F-75008 Paris (FR)**

(54) **Appareil de chauffage de fluides.**

(57)    Réchauffeur de fluides composé d'une paroi calorifuge dont l'intérieur est divisé en deux chambres (10, 11) par une cloison (9) traversée de tubes (12) conducteurs électriques alimentés en courant. Le fluide est chauffé fortement et pendant une assez longue durée par effet Joule.
   L'invention peut servir à ta combustion de gaz pauvres et à l'incinération de déchets de tous états entraînés par le fluide.

EP 0 475 850 A1

Jouve, 18, rue Saint-Denis, 75001 PARIS

L'invention se rapporte à un appareil de chauffage de fluides. Il peut être utilisé aussi bien pour un chauffage simple que pour d'autres traitements impliquant d'élever la température des fluides, tels que le craquage ou la combustion de gaz à faible pouvoir calorifique ou de déchets. Par ailleurs, le traitement peut porter sur les fluides eux-mêmes ou des produits entraînés par les fluides, qui servent alors uniquement de fluides porteurs transmettant la chaleur.

L'appareil conforme à l'invention présente comme avantage essentiel sur les appareils déjà connus une efficacité beaucoup plus grande, c'est-à-dire un chauffage rapide à une température élevée suivi d'un maintien relativement long à cette température.

Il comprend une enveloppe calorifuge allongée munie d'orifices d'entrée et de sortie du fluide, de tubes conducteurs électriques ouverts à leurs extrémités, d'un dispositif d'alimentation en courant électrique des tubes, et d'une cloison divisant l'intérieur de l'enveloppe en deux parties, chaque orifice débouchant dans sa partie respective et les tubes traversant la cloison.

La réalisation décrite est agencée de façon que les tubes, la cloison et l'orifice de sortie du fluide instaurent une circulation du fluide à contre-courant entre le sens de circulation dans les tubes et le sens de circulation autour des tubes, dans la partie de l'intérieur de l'enveloppe associée à l'orifice de sortie. On peut ainsi grâce en particulier aux différences des sections et des vitesses de parcours de ces deux portions de l'appareil, chauffer très rapidement les fluides puis les maintenir longtemps à la température atteinte, ce qui est essentiel à certaines applications comme la dissociation ou au contraire la combinaison de molécules.

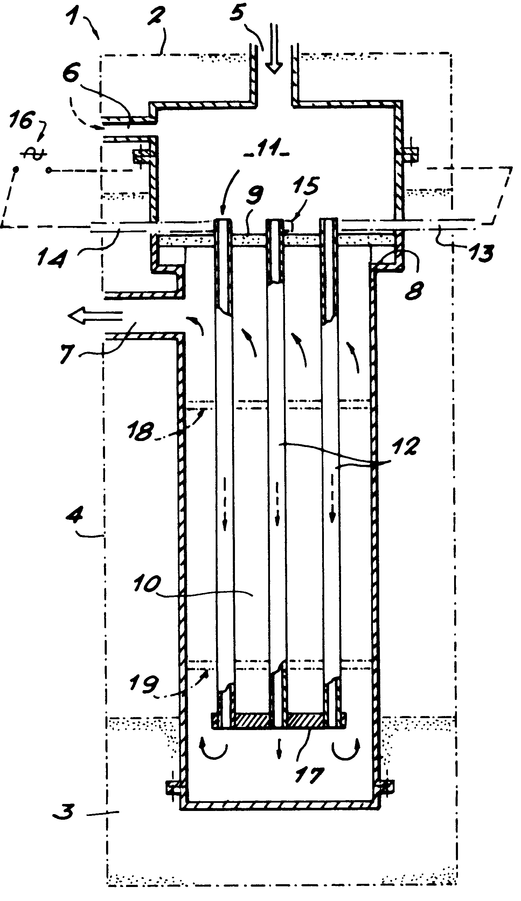

On va maintenant passer à la description de la figure unique illustrant, à titre non limitatif, une réalisation préférée de l'invention.

L'appareil comprend tout d'abord une enveloppe calorifuge 1 en forme de cylindre allongé et qui se compose de trois parties démontables : un couvercle supérieur 2 et un couvercle inférieur 3 joints par une paroi intermédiaire 4. Il faut cependant noter que l'emploi de l'appareil est concevable dans n'importe quelle position ou orientation. L'enveloppe calorifuge 1 peut être composée d'une couche interne réfractaire en métal, briques ou ciment, et d'une couche externe isolante en laine de verre ou fibres céramiques, éventuellement entourée par une doublure de protection. Les trois parties sont serrées par des brides boulonnées non représentées et l'étanchéité est assurée par des joints.

Le couvercle supérieur 2 est percé d'un orifice d'entrée de fluide 5 et, facultativement, d'un orifice d'introduction de produit d'addition 6, et la paroi intermédiaire 4 est percée d'un orifice de sortie de fluide 7. La paroi intermédiaire 4 comprend par ailleurs sur sa face interne un épaulement 8 sur lequel une cloison 9 est posée. La cloison 9 sépare l'intérieur de l'enveloppe 1 en une chambre de détente, de maintien en température et/ou éventuellement de conditionnement 10 et un collecteur 11 qui peut être considéré comme une sorte de vestibule dans lequel le fluide demeure quelques instants avant de gagner la chambre 10. L'orifice d'entrée de fluide 5 et l'orifice d'introduction de produit d'addition 6 débouchent perpendiculairement dans le collecteur 11 qui est donc le siège de modifications brutales d'écoulement qui favorisent le mélange du fluide et des produits d'addition. L'orifice de sortir de fluide 7 débouche par contre dans la chambre 10, mais non loin de la cloison 9.

L'intérieur de l'enveloppe 1 est garni de tubes 12 parallèles et ouverts à leurs deux extrémités qui s'étendent essentiellement dans la chambre 10 tout en traversant la cloison 9 et se terminent non loin de celle-ci dans le collecteur 11. Les tubes 12 sont en un matériau conducteur électrique tel que l'acier inoxydable, l'acier réfractaire, le titane, l'Inconel selon les applications, et sont alimentés en courant électrique par des électrodes 13, 14 et 15 raccordées à un circuit 16 d'alimentation électrique continue ou alternative. Les tubes 12 sont raccordés entre eux à leur extrémité opposée par un système de couplage électrique 17. On a représenté ici trois tubes 12 alimentés par un circuit triphasé, ce qui est une solution commode à mettre en oeuvre, mais d'autres sont évidemment possibles. On a par ailleurs représenté des tubes 12 droits, orientés suivant l'élongation de l'enveloppe 1, alors que des tubes recourbés en serpentin ou toute autre forme peuvent aussi être envisagés si nécessaire.

Les tubes 12 sont maintenus à l'intérieur de la chambre 10 par des treillages 18 et 19 fixés sur la paroi interne de l'enveloppe 1, ou maintenus entre eux par un dispositif quelconque.

Le chauffage consiste donc à alimenter le circuit 16, ce qui chauffe les tubes 12 par effet Joule. L'appareil est alimenté en fluide à partir de l'orifice d'entrée 5, qui communique avec un circuit de fluide non représenté qui peut comprendre en particulier une pompe. Si l'application l'exige, on peut faire entrer du produit d'addition par l'orifice 6 qui est relié soit à un autre circuit hydraulique, soit à une trémie dans laquelle on a versé du produit solide à l'état fragmenté. Le mélange éventuel s'effectue dans le collecteur 11, et le fluide finit par passer à l'intérieur des tubes 12 qu'il traverse avant de déboucher dans la chambre 10 à son extrémité opposée à la cloison 9. Il parcourt ensuite l'intérieur de la chambre 10 avant de sortir par l'orifice de sortie 7, qui communique avec un circuit d'évacuation ou d'aspiration. On réalise donc une circulation à contre-courant dans la chambre 10. Le caractère démontable de l'enveloppe 1 permet d'avoir facilement accès aux tubes 12 afin de les nettoyer ou de les remplacer. L'avantage fondamental de l'invention est de pouvoir chauffer très rapidement le fluide quand il passe dans les tubes 12, dont la section est petite. Le fluide est ensuite maintenu à la température atteinte dans la chambre 10, dans laquelle il transite pendant le temps nécessaire assez longtemps, car les tubes 12 cèdent une certaine partie de leur énergie au fluide extérieur. La température atteinte peut dépasser 1000°C. L'échauffement du fluide peut ne durer que quelques millièmes de seconde, mais le maintien en température près d'une seconde pour certaines applications telles que le craquage de molécules gazeuses.

La couche interne de l'enveloppe 1 participe également très bien au chauffage car elle est portée à une haute temperature grâce à la chaleur transmise par les tubes 12, par rayonnement quand le fluide est gazeux ou par conduction. Il est inutile de prévoir un moyen particulier de chauffage de la couche interne de l'enveloppe 1, ce qui simplifie l'installation en limitant le nombre de connexions d'alimentation électrique et les problèmes d'isolation afférents.

On peut citer parmi les applications possibles de cet appareil la combustion ou l'incinération de composés organiques tels que des solvants utilisés dans la peinture ou dans l'imprimerie, des graisses, ou d'une façon générale des déchets organiques liquides, pâteux ou pulvérulents. L'air peut être utilisé comme fluide porteur pour des solvants vaporisés.

**Revendications**

1. Appareil de chauffage de fluides caractérisé par la combinaison d'une enveloppe calorifuge (1) munie d'orifices d'entrée (5) et de sortie (7) de fluides, de tubes (12) conducteurs électriques ouverts à leurs extrémités, d'un dispositif d'alimentation en courant électrique (13 à 16) des tubes, et d'une cloison (9) divisant l'intérieur de l'enveloppe (1) en deux parties, chaque orifice (5, 7) débouchant dans une partie respective (10, 11) et les tubes (12) traversant la cloison (9).

2. Appareil de chauffage de fluides suivant la revendication 1, caractérisé en ce que l'enveloppe est formée de parties séparables (2, 3, 4).

3. Appareil de chauffage de fluides suivant l'une quelconque des revendications 1 ou 2, caractérisé par un orifice d'introduction de produit d'addition (6) qui débouche dans la partie (11) de l'intérieur de l'enveloppe où l'orifice d'entrée du fluide débouche.

4. Appareil de chauffage de fluides suivant l'une quelconque des revendications 1 à 3, caractérisé en ce que la cloison (9), les tubes (12) et l'orifice de sortie (7) du fluide sont agencés de façon qu'une circulation à contre-courant soit instaurée entre du fluide coulant dans les tubes et du fluide coulant dans la partie (10) de l'intérieur de l'enveloppe dans laquelle l'orifice d'évacuation du fluide débouche.

Office européen
des brevets

**RAPPORT DE RECHERCHE EUROPEENNE**

Numero de la demande

EP    91 40 2439

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2 397 766 (LINDE AKTIENGESELLSCHAFT) <br> * le document en entier * <br> --- | 1 | F24H1/10 |
| A | GB-A-339 649 (CARLETON) <br> * page 4, ligne 41 – page 4, ligne 54 * <br><br> ----- | 1 | |

**DOMAINES TECHNIQUES RECHERCHES (Int. Cl.5 )**

F24H

Le présent rapport a été établi pour toutes les revendications

| Lieu de la recherche | Date d'achèvement de la recherche | Examinateur |
|---|---|---|
| LA HAYE | 20 NOVEMBRE 1991 | Harrie van Gestel |

EPO FORM 1503 03.82 (P0402)